# EUROPÄISCHE PATENTSCHRIFT

(11) **EP 1 723 597 B1**
(45) Veröffentlichungstag und Bekanntmachung des Hinweises auf die Patenterteilung: **23.05.2012**
(21) Anmeldenummer: 05728201.4
(22) Anmeldetag: 08.03.2005
(51) Int. Cl.: G06Q 10/00, B65G 1/137

(54) **LAGERSYSTEM UND VERFAHREN ZUR LAGERVERWALTUNG**
STOCKING SYSTEM AND METHOD FOR MANAGING STOCKING
SYSTEME DE STOCKAGE ET METHODE DE GESTION DE STOCKS

(30) Priorität: 11.03.2004 CH 4032004
(43) Veröffentlichungstag der Anmeldung: 22.11.2006
(73) Patentinhaber: Universität St. Gallen Hochschule für Wirtschafts-, Rechts- und Sozialwissenschaften (HSG), 9000 St. Gallen (CH); ETH Zürich, 8092 Zürich (CH)
(72) Erfinder: FLEISCH, Elgar, CH-9010 St. Gallen (CH); HIEROLD, Christofer, CH-8634 Hombrechtikon (CH); HILDENBRAND, Katharina, CH-8802 Kilchberg (CH); BECKENBAUER, Bernold, 64287 Darmstadt (DE); METZGER, Christian, CH-8008 Zürich (CH)
(74) Vertreter: Lohmanns, Arno
(86) Internationale Anmeldenummer: PCT/EP2005/002395
(87) Internationale Veröffentlichungsnummer: WO 2005/088494

(56) Entgegenhaltungen:
- EP-A- 0 575 616
- DE-C- 10 111 956
- US-A1- 2001 056 313
- US-A1- 2002 138 374
- US-A1- 2003 164 754

## Beschreibung

Die Erfindung betrifft ein Lagersystem nach dem Oberbegriff des Anspruchs 1, ein Verfahren zur Lagerverwaltung nach dem Oberbegriff des Anspruchs 9 und ein Computerprogrammprodukt nach Anspruch 12.

In vielen Bereichen der Wirtschaft, insbesondere aber im Handel und im produzierenden Gewerbe werden Lager unterhalten, deren Verwaltung und Beschickung hohe Anforderungen stellen. Zu den allgemeinen Anforderungen zählen auf der einen Seite die Minimierung der gelagerten Bestände und damit der Kapitalbindung sowie auf der anderen Seite die schnelle Verfügbarkeit der zu lagernden bzw. gelagerten Güter.

Insbesondere im Einzelhandel zählt neben der Schlangenbildung vor dem Check-out und dem Diebstahl die mangelnde Verfügbarkeit bzw. "Out of Stock"-Problematik zu den aktuell grössten Problemen. Konkret bedeutet dies, dass der Kunde vor einem leeren Regal steht und sein Wunschprodukt nicht kaufen kann, so dass neben der versäumten Verkaufshandlung auch eine Frustration des Kunden folgt. Typischerweise sind diese Produkte jedoch nicht ausverkauft, sondern liegen im filialeigenen Lagerraum oder in Lagern höherer Hierarchieebenen. Die mangelnde Nachbeschichtung der Regale ist eine der wichtigsten Ursachen der mangelnden Verfügbarkeit.

In technischer Hinsicht stellt, neben dem physischen Transport und dem Warenumschlag, vor allem die Erfassung und Bereitstellung der Informationen über die aktuellen Bestände wie auch der zu erwartenden Veränderungen der Bestandsgrössen ein Problem dar. Lösungen des Stands der Technik basieren daher zum einen auf der Erfassung von Veränderungen in Form von Zu- und Abfluss-Messung, d.h. von Stromgrössen. Ein Beispiel für solche Lösungen stellt der Barcode-Leser der Kassensysteme dar. Dieser Ansatz weist die üblichen Schwächen inkrementeller Ansätze, wie z.B. die Anfälligkeit für Fehlerfortpflanzungen oder systematische Fehler, aber auch spezifische Schwächen auf, wie z.B. falsche oder fehlende Erfassung von entnommenen Gütern, beispielsweise aufgrund von Diebstahl. Ausserdem entstehen durch die Strecke zwischen Lagerort und Erfassungspunkt Zeitverzögerungen in der Datenerfassung.

Zum anderen versuchen Lösungen des Stands der Technik eine direkte Bestandsmessung und damit Erfassung der Bestandsgrössen. Da diese aufgrund der typischerweise sehr grossen Zahl von Lagerstellen und Gütern zumeist automatisiert und technisch einfach erfolgen muss, ist der in der Praxis nutzbaren Komplexität Grenzen gesetzt. Allgemein bewährt hat sich die Gewichtsmessung der an einer Lagerstelle aufbewahrten Güter.

So beschreibt die US 2003/0164754 A1 ein Verfahren und eine Vorrichtung zur Lagerdauerüberwachung von Gegenständen an einem Lagerort. Die Erkennung der Gegenstände erfolgt optisch durch eine kameraunterstützte visuelle Überwachung. Ein Gewichtssensor unterstützt die die Erkennung mittels Kamera, um eine Kameraauswertung bei einer Gewichtsänderung auszulösen, die Fokussierung der Kamera zu unterstützen oder um bei keiner optischen Veränderung die Gewichtsänderung auf einen Verbrauch der in der Verpackung befindlichen Ware zurückzuführen.

Die EP 0 575 616 A offenbart ein Artikelüberwachungssystem, bei dem Artikel, an denen jeweils Etiketten mit metallischen Kodierelementen befestigt sind, mittels eines auf einer Oberseite eines Artikelstands angeordneten flachen Matrixsensors, erfassbar sind. Das metallische Kodierelement enthält Informationen über die Art und die Anzahl des Artikels. Wird der Artikel auf einen Matrixsensor gelegt oder von diesem entfernt, verursacht das metallische Kodierelement eine Veränderung einer elektromagnetischen Eigenschaft, beispielsweise durch die Erzeugung von Wirbelströmen. Diese Veränderung der elektromagnetischen Eigenschaft ist durch den Matrixsensor detektierbar.

Die EP 1 333 257 A1 beschreibt eine Anordnung zur Überwachung des Füllungsgrades von einzelnen Behältern in einem Lagersystem. Ein Behälter für gleichartige Artikel wird mit einem Sensor versehen, der beim Unterschreiten einer gewichtsabhängigen Schwelle eine Massnahme zur Befüllung auslöst.

In WO 02/25230 wird eine Logistik-Waage beschrieben, die ein Regal umfasst, welches Teile oder Behälter über eine Tragstruktur aufnimmt, deren Last über zwei Kraftmesszellen gemessen wird. Durch eine geeignete algebraische Verbindung der Messresultate soll sowohl das Gewicht der Teile oder Behälter, als auch deren Ort ermittelt werden können.

US 4,419,734 zeigt ein System zur Bestandskontrolle mit einer Vielzahl von Lagerbereichen für jeweils einen identischen Typus von Ware, wobei die Belastung dieser Lagerbereiche und deren Veränderung erfasst werden. Für jeden Lagerbereich kann der Bestand und dessen Veränderung abgeleitet werden.

Die EP 0 063 354 beschreibt ein Verfahren und eine Vorrichtung zur Ermittlung der Vorratsmenge von Gütern in einem Lager. Hierbei wird für verschiedene Ablageorte sortenweise getrennter Güter das jeweilige Gesamtgewicht gemessen. Durch divisionsmässige Verrechnung mit dem jeweiligen Einzelgewicht des Gutes kann die Stückzahl abgeleitet werden.

In der JP 10017121 wird ein Regal mit einzelnen Fächern für verschiedne Güter beschrieben. Durch Dehnungsmesstreifen erfolgt eine Messung des Gewichts der eingelagerten Güter. Die Menge der Güter bzw. deren Stückzahl wird von einem Rechner aus dem Signal der Gewichtsmessung abgeleitet und angezeigt.

Ein Nachteil der Lösungen des Stands der Technik liegt in den Massnahmen zur Verknüpfung des Gewichts eines einzelnen Gutes mit der Gewichtsmessung einer Vielzahl von solchen Gütern. Aufgrund der spezifischen Eigenschaften eines Gutes, wie z.B. dessen Grösse, muss die jeweilige Aufnahme bzw. der Lagerort zur physischen Lagerung geeignet ausgebildet werden. Deshalb werden meist normierte Lagerbehälter mit einem Wiegesystem verbunden, so dass aus dem Gesamtgewicht unter Kenntnis des Einzelgewichts die aktuelle Stückzahl berechnet werden kann. Solche Systeme sind für den Bereich des Einzelhandels schlecht geeignet, da die Vielzahl der Produkte und die notwendige Flexibilität in der Positionierung der Waren eine sinnvolle Nutzung von Wiegesystemen mit Standardbehältern verbietet. Ausserdem sind solche Wiegesysteme aufgrund der notwendigen physischen Modifikationen der für einzelne Produkttypen fest definierten Ablage- und Aufnahmebereiche nur schwer nachrüstbar bzw. nicht frei konfigurierbar. Insbesondere themenbezogene und damit häufig wechselnde Zusammenstellungen von Warengruppen können durch Lösungen des Stands der Technik nicht mit einer automatischen Bestandserfassung verbunden werden.

Die Lösungen des Stands der Technik erfordern darüber hinaus eine - sowohl physische als auch logisch/algorithmische - ex-ante-Zuordnung von Lagerfläche zu Gut, so dass bereits die Beschickung der Lagerfläche nach einem exakt einzuhaltenden Plan erfolgen muss.

Zudem ist das Verhalten des Endkunden zu berücksichtigen, der zum einen eine ergonomisch günstige Aufnahme von Waren fordert, zum anderen aber auch Fehler erzeugen kann, z.B. durch das falsche Zurücklegen einer entnommenen Ware, so dass in einen Behälter nun verschiedene Typen von Gütern abgelegt sind.

Schliesslich erlauben die behälterbasierten Lösungen des Stands der Technik keine Ortsbestimmung von Gütern jenseits ihrer Zuordnung zu dem speziellen Lagerbehälter.

Ein technisch aufwendiger und komplexer Ansatz besteht darin, die einzelnen Produkte selbst eindeutig identifizierbar zu gestalten. Einzelhandelsketten und Konsumgüterhersteller versuchen das Problem durch die Verwendung von RFID-Chips (Radio Frequency Identification Chips) zu lösen, indem Regale mit RFID-Antennen bestückt werden, so dass Produkte automatisch erfasst werden können. Dieser Ansatz setzt jedoch eine entsprechende Kennzeichnung jedes Produkts voraus, was auf Probleme in Herstellung bzw. Verpackung sowie auf Koordinationsschwierigkeiten innerhalb der Supply Chain stösst. Ausserdem ist aufgrund der physischen und ökonomischen Gegebenheiten nicht jedes Produkt mit einem Chip ausstattbar.

Eine Aufgabe der vorliegenden Erfindung besteht allgemein in der Verbesserung eines gattungsgemässen Lagersystems.

Insbesondere besteht eine Aufgabe in der Bereitstellung eines Lagersystems, das eine erhöhte Flexibilität in der Plazierung von zu lagernden Gütern aufweist.

Eine weitere Aufgabe besteht in der Bereitstellung eines, insbesondere hinsichtlich der Lagerung von Gütern rekonfigurierbaren, Lagersystems mit einer Fähigkeit zur parallelen Identifikation von Gütertyp und Gütermenge.

Eine weitere Aufgabe besteht in der Bereitstellung eines Lagersystems mit einer geringeren Störanfälligkeit.

Eine weitere Aufgabe besteht in der Bereitstellung einer zur Verwendung in einem erfindungsgemässen Lagersystem geeigneten modularen Komponente zur Nachrüstung von Lagersystemen des Stands der Technik.

Diese Aufgaben werden erfindungsgemäss durch Gegenstände der Ansprüche 1, 9 oder 12 bzw. durch Gegenstände der abhängigen Ansprüche gelöst bzw. die Lösungen weitergebildet.

Die vorliegende Erfindung betrifft ein Lagersystem und ein dafür geeignetes Verfahren zur Lagerverwaltung, wobei den zur Lagerung verwendeten Aufnahmen eine Vielzahl von Sensoren zugeordnet ist, so dass im Zusammenwirken eine Erfassung von Identität und Stückzahl der gelagerten Produkte bzw. Güter möglich ist.

Das erfindungsgemässe System identifiziert eindeutig einzelne Lager- oder Regalplätze auf verschiedenen Hierarchieebenen und misst deren Belegung durch einen Sensor, welcher stückzahlabhängige Grössen registriert. Dabei bildet das System ein Lagersystem als Sensornetzwerk ab. Die Sensordaten werden in verschiedenen Hierarchiestufen in Echtzeit gesammelt und nach vordefinierten oder erlernten bzw. statischen oder variablen Regeln ausgewertet, so dass automatisch eine Nachbevorratung gesteuert werden kann. Die Daten können dabei nicht nur filialintern, sondern auch unternehmensübergreifend, z.B. innerhalb der Supply-Chain verwendet werden.

Die Aufgaben Identifikation des Gutes und Messung der Stückzahl wird je nach Ausführungsform auf verschiedene Sensoreinheiten aufgeteilt oder durch eine einzige Sensoreinheit gelöst, wobei stets eine mindestens eindimensionale Anordnung von Sensoren in Form einer Zeile oder Matrix zur Anwendung kommt. Unter Sensorzeile bzw. Sensormatrix soll hier auch ein Bauelement subsumiert werden, dass eine identische Funktionalität aufweist, wie z.B. ein Zeilenscanner. Da für die betrachteten logistischen Anwendungen auf mechanische aufwendige Lösungen verzichtet werden soll, sind statische Arrays vorteilhaft, ohne dass deshalb andere Lösungen gleicher Funktionalität ausgeschlossen sind.

Eine Erfassung und vollständige Ableitung von Identifikation des Gütertyps und dessen Stückzahl ist erfindungsgemäss bereits durch ein gravimetrisches Sensorelement realisierbar, das gegebenenfalls durch ein optisches Sensorelement ergänzt oder innerhalb des Gesamtsystems ersetzt werden kann. Hierbei kann das optische Sensorelement als eigenständige, zusätzliche Komponente verwendet werden, oder aber die optische Funktionalität in das gravimetrische Sensorelement integriert werden, so dass dieses auch eine zusätzliche optische Sensorik aufweist. Somit erfolgt eine logische und/oder physische Zuordnung von gravimetrischer und optischer Funktionalität. Die Verwendung von gravimetrischer und ggf. optischer Funktionalität erlaubt eine Auslegung, welche die Identifikation der Waren und deren gleichzeitige Mengebestimmung verbindet. Dabei können besonders vorteilhaft die besonderen Eigenschaften der gravimetrischen und optischen Erfassung in einem System verknüpft werden.

Ein Beispiel für die Integration der Funktionalitäten von qualitativer und quantitativer Erfassung in ein einziges Sensorelement stellt eine matrixartige Anordnung von Gewichtssensoren dar, auf denen die Güter gelagert werden. Bei hineichend guter Auflösung kann aus der geometrischen Anordnung belasteter Sensoren auf die Bodenform der gelagerten Güter geschlossen werden, so dass sowohl deren Typ als auch deren Quantität bestimmt werden können.

Die Anforderungen an das Auflösungsvermögen der Sensoren werden dabei von der Struktur der Datenerfassung und Datenhaltung, insbesondere von deren Hierarchisierung, bestimmt. So genügt es, nur eine geringe Zahl von Bodenformen differenzieren zu können, wenn die logische Zuordnung der Aufnahme für die zu lagernden Güter zu einer Warengruppe klar determiniert ist. Dies kann aber auch aktuell bestimmt werden, z.B. indem ein Regal eine Codestruktur trägt, welche von einem optischen Sensor erfasst werden kann. Beispielsweise kann mit diesem Ansatz die Information, dass zehn rechteckig und zusammenhängend angeordnete Drucksensoren belastet sind, dazu verwendet werden, eine Gruppe von insgesamt zwanzig möglichen Typen von Gütern zu identifizieren. Die Information, dass die betreffende Aufnahme Güter der Warengruppe Elektronik beinhaltet, lässt dann evtl. eine eindeutige Identifikation des Typs als Verkaufsbehälter für Batterien zu. Das von den zehn Sensoren gemessenen Gesamtgewicht lässt dann den Schluss auf die noch in der Verpackung bevorratete Zahl von Batterien zu.

Um eine Eindeutigkeit der Identifikation zu gewährleisten, können Informationen weiterer Sensoren herangezogen werden. Diese können beispielsweise die Farbe oder die Lagertemperatur erkennen. Grundsätzlich kann natürlich auch die benötigte Information ex-ante bzw. systemextern erfasst werden, z.B. indem klar vorab festgelegt wird, dass im Bereich einer Teilmenge von Sensoren stets Güter eines speziellen Typus gelagert werden. Ein vorteil der Erfindung liegt aber gerade darin, dass flexible und softwareseitige Lösungen möglich werden, die dynamische Anpassungen unter Ausnutzung aller logischen bzw. algorithmischen Vorteile eines Multisensornetzwerkes ermöglichen.

Insbesondere optische Systeme erlauben eine gute Auflösung und Identifikation von Waren. Ein solches optisches System kann beispielsweise mittels CCD- oder CMOS-Kameras und an sich bekannter Bildverarbeitungssoftware realisiert werden. Neben der matrixartigen Anordnung von Sensoren in diesen Kameratypen können auch reine Lineararrays als zeilenartige Kameras verwendet werden. Im von einem solchen optischen Sensor aufgenommenen Bild können einzelne Güter sowohl identifiziert und somit hinsichtlich ihres Typs wie auch ihrer Menge bestimmt werden. Die Anordnung als Sensorzeile oder Sensormatrix bedeutet in diesem Zusammenhang eine zumindest ein- oder zweidimensionale Abfolge von Sensoren, wobei Sensorcharakteristik und Beabstandung durch die technische Ausführung der Sensoren und die zu erfassende Aufnahme bzw. die darauf zu lagernden Güter determiniert werden.

Diese erfindungsgemässe Lösung besitzt Vorteile, wenn alle Güter hinreichend sichtbar sind und unter den gewählten Bedingungen und optischen Parametern auch sicher zu identifizieren sind. Eingeschränkt wird eine Verwendung, wenn Güter in Reihen oder Gebinden gelagert werden, bei denen nur einige wenige Objekte optisch erfassbar sind. Probleme treten auch bei Schüttgütern oder Kleinteilen auf, die wiederum in Verpackungen dargeboten werden, aus denen der Abverkauf stattfindet. Beispiele für solche Güter stellen insbesondere in Reihen gelagerte Dosen oder Süsswaren, wie z.B. Schokoladenriegel, dar.

Für solche Situationen genügt lediglich eine Identifikation des Gütertypus für nur ein Exemplar einer Warenmenge, wenn deren Quantität anderweitig bestimmt werden kann. Diese Identifikation kann beispielsweise durch einen optischen Sensor erfolgen, wohingegen die Mengenbestimmung durch einen Gewichtssensor erfolgen kann. Somit können erfindungsgemäss Identifikation und Mengenbestimmung auf zwei Sensorelemente bzw. zwei Funktionalitäten eines Sensorelementes aufgeteilt werden.

Zuordnungen von Aufnahmen zu Warengruppen, neue Gütertypen und Verarbeitungsalgorithmen können aufgrund der Universalität der Datenerfassung einfach und ohne physische Veränderungen nur auf der logischen Ebene verändert werden.

Die von einem solchen als Netzwerk ausgebildeten Lagersystem aufgenommenen Sensordaten können beispielsweise als kombinatorisches Problem modelliert werden, aus dem eine eindeutige Lösung abgeleitet wird, die eine Belegung aller Aufnahmen mit Gütern eines bestimmten Typus und einer bestimmten Quantität darstellt. Zur Ableitung dieser Lösung werden alle Daten auf mehreren Ebenen verknüpft und der Raum der möglichen Lösungen durch Nebenbedingungen, wie z.B. einer beschränkten Zahl von zulässigen Bodenformen, reduziert. Zur Lösung von grundsätzlichen kombinatorischen Problemen dieser Art stehen bekannte Ansätze und Verfahren zur Verfügung, wobei Komplexität des Lösungsalgorithmus und Zahl der Sensoren bzw. Granularität der Datenaufnahme in einem komplementären Verhältnis stehen. Beispiele für geeignete Algorithmen sind Genetische Algorithmen, Tabu Search oder Simulated Annealing.

Vorteilhafterweise wird jedoch durch eine geeignete Zahl und Anordnung von Sensoren die Mehrdeutigkeit der Lösungen von Anfang an gering gehalten. Möglichkeiten für eine solche Ausgestaltung zur multiplen Datenaufnahme durch Sensorzeilen bzw. Sensormatrizen bilden beispielsweise
- die Integration von Drucksensoren in einem Regal an den Seitenträgern eines Regalbodens,
- die Integration von Drucksensoren in den Regalboden,
- die Integration in Einlegeböden, welche nachträglich in bestehende Regale eingebaut werden können, z.B. durch Auflegen auf fixe Regalböden,
- die Integration von Zugsensoren zur Gewichtsmessung in Hänge-Regalen bzw. an Haken,
- die Integration von optischen scannenden oder Kamerasensoren im oberhalb der zu lagernden Güter befindlichen Regalboden,
- die Integration von optischen scannenden oder Kamerasensoren auf der den lagernden Güter gegenüberliegenden Regalseite,
- die Integration von lichtempfindlichen Hell-DunkelSensoren in den Regalboden.

Hierbei sind erfindungsgemässe Kombinationen dieser Ausgestaltungen sowie auch Kombinationen mit anderen Sensortypen, beispielsweise zur Temperatur- oder Luftfeuchtigkeitsmessung, vorteilhaft.

Als erfindungsgemäss geeignete Sensoren können beispielsweise verwendet werden
a. Drucksensoren,
b. Kontaktfolien mit einer Messung von Widerstand bzw. Kapazität,
c. berührungssensitive Oberflächen (sog. Touch-Pad),
d. magnetostriktive Sensoren,
e. Accoustic-wave Sensoren,
f. piezoelektrischer Sensoren,
g. CCD- oder CMOS-Kameras,
h. Kameras mit aktiver Beleuchtung,
i. Hell-Dunkelsensoren, z.B. mit Photodioden.

Geeignete Ausführungsformen für solche Sensoren werden im Stand der Technik bereitgestellt.

Die Sensoren bzw. Elemente aus einer zeilen- oder matrixförmigen Anordnung von Sensoren sind entweder über Kabel oder WLAN an ein Informationssystem gekoppelt, welches die entsprechenden Daten bzgl. der auf einer Aufnahme befindlichen Produkte auswertet. Verknüpft mit der Erfassung der Güter nach Typ und Menge erfolgt eine zielgerichtete Auswertung dieser Information. So wird eine automatische Nachfüllung veranlasst, wenn eine Mindestmenge einer Produktsorte aus dem Regal entfernt wurde.

Durch eine informatorische Anbindung des Lagersystems an höhere Ebenen eines Logistiksystems können Aufgaben der standort- und unternehmensübergreifenden Planung und Koordination, wie z.B. ein Supply-Chain-Management, gelöst werden.

Das erfindungsgemässe Lagersystem, modulare Erfassungskomponenten bzw. ein erfindungsgemässes Verfahren werden nachfolgend anhand von in der Zeichnung schematisch dargestellten Ausführungsbeispielen rein beispielhaft näher beschrieben bzw. erläutert. Im einzelnen zeigen
- Fig.1a-b: die schematische Darstellung einer Aufnahme für zu lagernde Güter nach dem Stand der Technik im Vergleich zu einer Aufnahme für zu lagernde Güter in einem erfindungsgemässen Lagersystem;
- Fig.2: die schematische Darstellung der Aufnahme eines erfindungsgemässen Lagersystems mit einer matrixartigen Anordnung von Sensoren;
- Fig.3: die schematische Darstellung der Aufnahme eines erfindungsgemässen Lagersystems mit einem ersten Ausführungsbeispiel eines optischen Sensors;
- Fig.4: die schematische Darstellung der Aufnahme eines erfindungsgemässen Lagersystems mit einem zweiten Ausführungsbeispiel eines optischen Sensors;
- Fig.5: die schematische Darstellung der informatorischen Systemarchitektur eines erfindungsgemässen Lagersystems;
- Fig.6: die schematische Darstellung dreier Ausführungsbeispiele von erfindungsgemässen modularen Erfassungskomponenten;
- Fig.7: die schematische Darstellung der Verwendung eines ersten Ausführungsbeispiels einer modularen Erfassungskomponente zur Nachrüstung eines Regals;
- Fig.8: die schematische Darstellung eines Ausführungsbeispiels der erfindungsgemässen Kombination von Sensoren;
- Fig.9a-b: die schematische Darstellung von Beispielen der Bildverarbeitung zur Identifikation von Gütern bzw. Gütertypen und
- Fig.10: die schematische Darstellung der Aufnahme eines erfindungsgemässen Lagersystems mit einem dritten Ausführungsbeispiel eines optischen Sensors mit aktiver Beleuchtung.

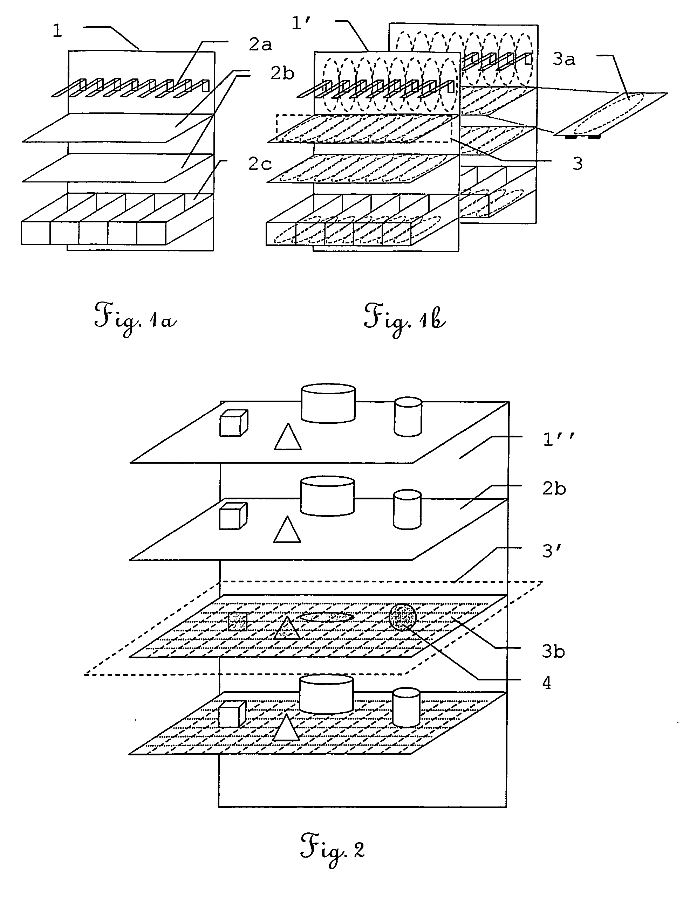

In Fig.1a wird ein Lagerregal 1 nach dem Stand der Technik beschrieben, das über drei verschiedene Typen von Aufnahmen verfügt. An strebenförmigen Haken 2a können einzelne Güter angehängt oder Behälter aufgelegt werden. Übereinander angeordnete Regalböden 2b dienen zur Aufnahme von Produkten. In fächerartigen Kästen 2c können gleichartige Kleinteile aufgenommen werden. Für solche Kästen werden im Stand der Technik einfache, mit den jeweiligen Kästen verbundene Wiegemechanismen verwendet, um die darin gelagerten Teilemengen zu bestimmen.

Fig.1b zeigt ein erfindungsgemäss modifiziertes Lagerregal 1' zur Verwendung in einem Lagersystem aus einer Vielzahl von Lagerflächen. Den Aufnahmen für zu lagernde Güter wird eine Sensorzeile aus einzelnen gewichtssensitiven Sensoren 3a als gravimetrisches Sensorelement 3 zugeordnet, so dass die Belegung bzw. Belastung der gesamten beanspruchten Aufnahme in Form einer Datenaufnahme an multiplen Punkten erfasst und damit das Lagersystem als Sensornetzwerk modelliert werden kann.

In Fig.2 wird die Ausgestaltung der Aufnahme 2b eines Regals 1" mit einer Anordnung von Sensoren 3b in Form einer Sensormatrix als gravimetrisches Sensorelement 3' dargestellt. Durch diese flächige Anordnung ist es bei hinreichender Auflösung möglich, die Bodenform bzw. Bodenfläche 4 gelagerter Güter zu bestimmen. Dabei können beispielsweise Gewichtssensoren und/oder Hell-DunkelSensoren verwendet werden. Aus der Form der Fläche zusammenhängend belasteter und/oder abgedunkelter Sensoren kann dann auf die Bodenfläche 4 geschlossen werden. Verfügt das Lagersystem über die Information, welche Warengruppe in diesem Regal 1" gelagert wird, so genügt eine vergleichsweise einfache Auflösung, um den Typ von Gütern zu identifizieren. Je nach Typus kann dann aus dieser Identifikation auch direkt die Quantität abgeleitet werden, z.B. bei grossen Dosen, Gebinden oder Getränkekisten, oder aber es müssen noch zusätzlich Gewichtsinformationen herangezogen werden, die aber beispielsweise bei einer Matrix aus Drucksensoren ohnehin vorhanden sind.

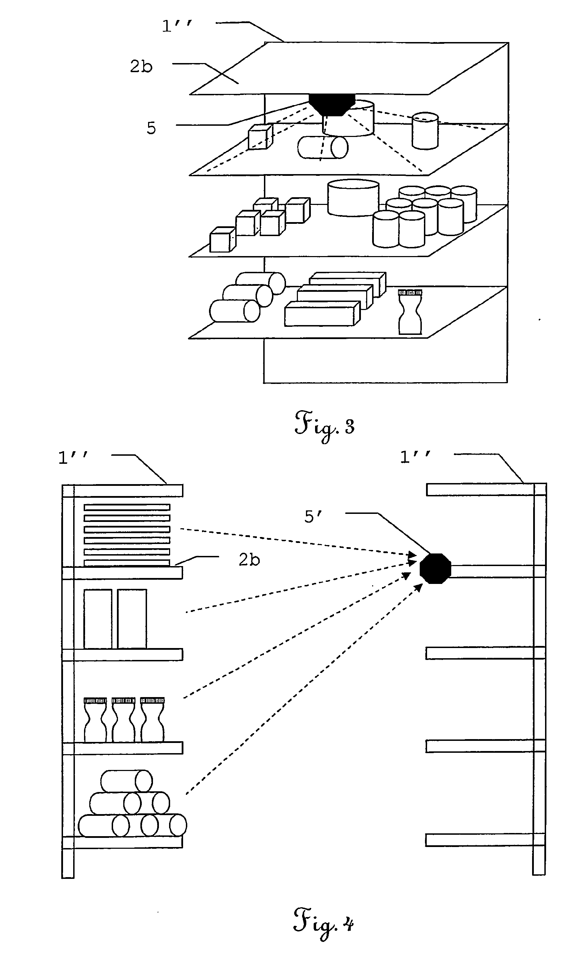

Fig.3 zeigt die schematische Darstellung der Aufnahme 2b eines Lagerregals 1" mit einem ersten Ausführungsbeispiel eines optischen Sensorelements 5, wobei weitere Sensorelemente, wie z.B. das gravimetrische Sensorelement aus Anschaulichkeitsgründen nicht dargestellt werden. Das optische Sensorelement 5 ist über einer Aufnahme 2b an der Unterseite einer darüber befindlichen Aufnahme 2b angebracht. Durch die optische Erfassung der unter ihm gelagerten Güter kann eine Identifizierung und ggf. auch Mengenerfassung erfolgen. Bei einer nur schwachen Belegung der Aufnahme 2b, z.B. mit Schmuck oder Uhren, können die Aufnahmen durchscheinend ausgeführt werden, so dass unter günstigen Bedingungen mit einem einzigen optisches Sensorelement 5 mehrere Aufnahmen 2b erfasst werden können. In anderen Fällen muss ggf. für jede Aufnahme 2b ein einzelnes optisches Sensorelement 5 verwendet werden. Die durch das optische Sensorelement 5 erfassten Informationen können nun mit den Ergebnissen weiterer Sensoren oder Sensorenanordnungen verknüpft werden. Insbesondere kann dabei ein optisches Sensorelement 5 auch mehreren gravimetrischen Sensorelementen zugeordnet sein.

Fig.4 beschreibt die Anordnung von zwei Lagerregalen 1" mit Aufnahmen 2b und einem zweiten Ausführungsbeispiel eines optischen Sensorelements 5'. Das optische Sensorelement 5' ist an einer optisch vorteilhaft plazierten Aufnahme 2b eines der zu erfassenden Aufnahme 2b bzw. dem zu erfassenden Lagerregal 1" gegenüberliegenden Lagerregal 1" angebracht. Durch diese Anbringung kann mit nur einem optischen Sensorelement 5' ein grosser Bereich von Aufnahmen 2b für zu lagernde Güter erfasst werden.

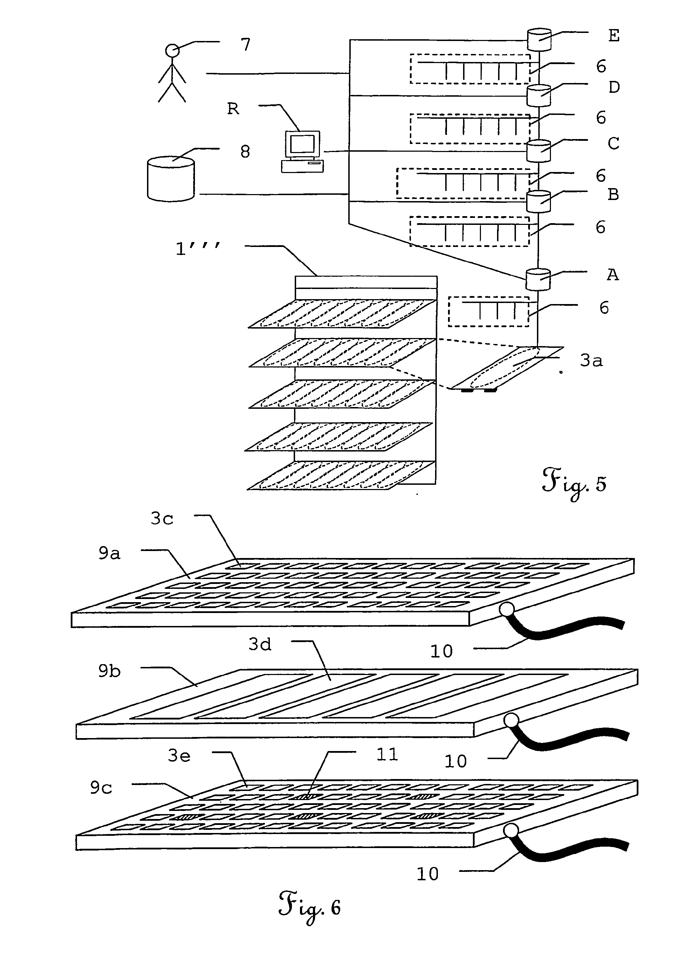

Fig.5 zeigt die schematische Darstellung der informatorischen Systemarchitektur eines erfindungsgemässen Lagersystems. Die in einem Lagerregal 1"' zeilen- oder matrixartig angeordneten Sensoren 3a werden über Kommunikationsleitungen in Form eines Sensornetzwerkes mit dem Gesamtsystem verbunden. Dabei bilden jeweils einzelne Gruppen von Lagerregalen oder andere Aufbewahrungseinheiten logisch und/oder physisch hierarchische Stufen, denen beispielsweise Warengruppen, Standorte oder rechtliche bzw. verwaltungsseitige Zugehörigkeiten zugeordnet werden. In diesem Beispiele erfolgt eine mehrstufige Aggregierung auf den Ebenen des Regals A, des Regalsystem B, der Filiale C, des Unternehmens D und der Supply-Chain E, wobei jeweils mehrere Entitäten bzw. Datenverbindungen der nächstniedrigen Hierarchieebene eines Kommunikationsnetzwerks 6 zur Konstituierung der aktuellen Ebene beitragen. Zur Datenverarbeitung verfügt das Gesamtsystem über eine oder mehrere Recheneinheiten R, wobei diese auch den verschiedenen Ebenen zugeordnet sein können. Das gesamte Lagersystem bzw. dessen kommunikative Einbindung in externe Systeme besitzt darüber hinaus Schnittstellen zu unternehmensinternen oder -externen Mitarbeitern 7 oder Informationssystemen 8.

In Fig.6 erfolgt die schematische Darstellung dreier Ausführungsbeispiele von erfindungsgemässen modularen Erfassungskomponenten zur Nachrüstung bestehender Regale bzw. Aufnahmesysteme des Stands der Technik. Diese Erfassungskomponente ist als flächiges Element, insbesondere ausrollbares Folienelement, ausgebildet, so dass eine Positionierung zwischen einer Aufnahme und den zu lagernden Gütern erfolgen kann. Durch eine Kommunikationsverbindung, die hier als Kabel 10 ausgeführt ist, erfolgt eine Anbindung an das Lagersystem, wobei gleichfalls auch drahtlose Verbindungen geeignet sind. Die erste modulare Erfassungskomponente 9a weist eine matrixartige Anordnung von gleichartigen Sensoren 3c, z.B. Drucksensoren, ggf. mit integrierter optischer Funktionalität, auf. Dabei können Druck- und optische Sensoren beispielsweise zweilagig angeordnet sein, wenn das Material der Drucksensoren für den gewählten Spektralbereich der optischen Sensoren durchlässig ist. Durch diese flächige Anordnung von Sensoren wird der gesamte Lagerbereich bzw. die gesamte Lagerfläche vollflächig abgedeckt bzw. erfasst. Diese Ausgestaltung erlaubt bei hinreichend feiner Granulierung der Sensorfläche und darauf abgestimmter Auswerteelektronik die beliebig angeordnete Lagerung von verschiedenen Gütern, so dass eine einheitliche Ausstattung von beispielsweise Regalflächen möglich ist, welche flexibel und ohne Nachrüst- bzw. Adaptionsaufwand genutzt werden kann. Die zweite modulare Erfassungskomponente 9b verfügt über eine lineare Anordnung identischer streifenförmiger Sensoren 3d. In die dritte modulare Erfassungskomponente sind zwei unterschiedliche Sensortypen integriert. Die Matrix aus Sensoren 3e beinhaltet einzeln eingebettete weitere Sensoren 11, die beispielsweise zur Erfassung andersartiger Parameter, wie z.B. Temperatur, ausgebildet sind. Mit einer solchen Erfassungskomponente können beispielsweise in einer Gefriertruhe parallel Temperatur und Menge des eingelagerten Gutes registriert werden. Eine Ergänzung um einen weiteren Sensortyp erlaubt beispielsweise in einem Humidor die Kontrolle von Temperatur, Luftfeuchtigkeit und Zigarrenanzahl.

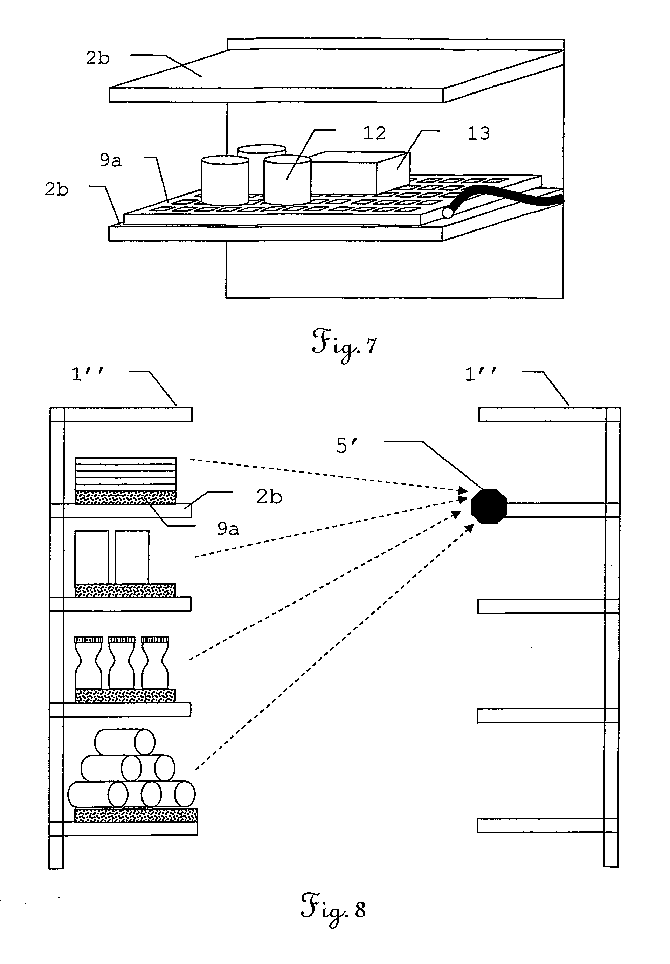

In Fig.7 wird die schematische Darstellung der Verwendung eines ersten Ausführungsbeispiels der ersten modularen Erfassungskomponente 9a zur Nachrüstung eines Regals verdeutlicht. In diesem Regal werden die Aufnahmen 2b mit der ersten modularen Erfassungskomponente 9a vollflächig ausgelegt, so dass unterschiedliche Güter dort gelagert werden können. In diesem Beispiel können anhand der Anzahl von zusammenhängend belasteten Drucksensoren die Bodenformen abgeleitet und somit die Dosen 12 in ihrer Zahl bestimmt und zudem von der Verkaufspackung 13 für Ketchup-Kleinpackungen unterschieden werden. Darüber hinaus kann die noch in der Verkaufspackung 13 befindliche Anzahl von Ketchup-Kleinpackungen anhand des Gesamtgewichts der Verkaufspackung 13 bestimmt werden.

Fig.8 zeigt die schematische Darstellung eines Ausführungsbeispiels für eine erfindungsgemässe Kombination von Sensortypen. In einem der beiden gegenüberstehenden Lagerregale 1" werden die zu lagernden Güter auf ersten modularen Erfassungskomponenten 9a plaziert. Aufgrund der in diesem Beispiel angenommenen nicht hinreichend guten Unterscheidungswirkung der Bodenform erfolgt die Nutzung eines optischen Sensorelements 5', welches an der Innenseite des gegenüberliegenden Lagerregals 1" angebracht ist. Durch das optische Sensorelement 5' erfolgt die Identifizierung der gelagerten Güter wohingegen deren Mengenbestimmung anhand des gemessenen Gewichts erfolgt. Eine ausschliessliche Verwendung des rein optischen Sensorelements 5' scheitert in diesem Beispiel anhand der dichten und gegenseitig abdeckenden Lagerung der Güter.

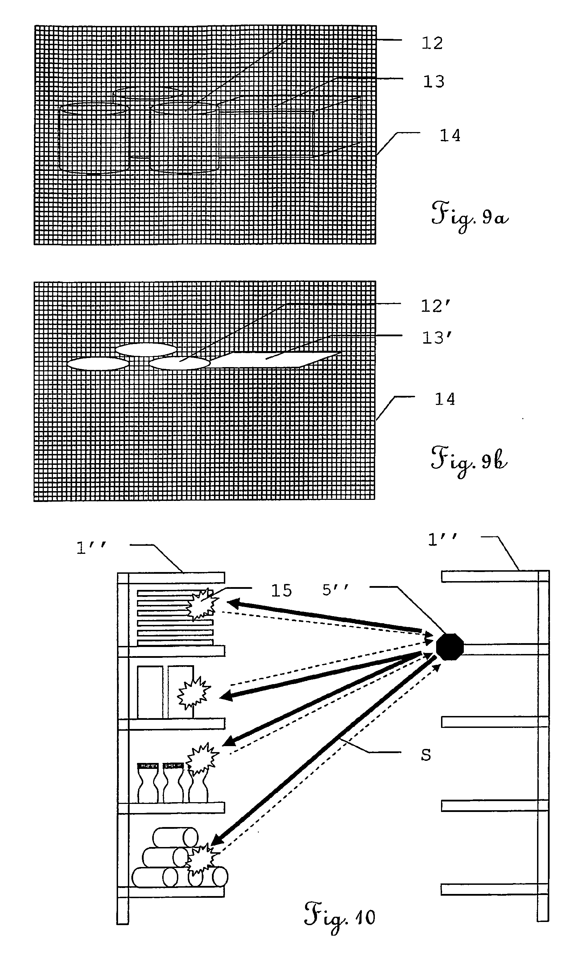

Fig.9a-b erläutern die schematische Darstellung von Beispielen der Bildverarbeitung zur Identifikation von Gütern bzw. Gütertypen. Fig.9a zeigt schematisch die Erfassung von gemäss Fig.7 gelagerten Dosen 12 und Verkaufspackungen 13 mit der Sensormatrix 14 einer CCD-Kamera als optisches Sensorelement, das in ein gravimetrisches Sensorelement integriert werden kann, so dass parallel Gewichtsmessungen und optische Erfassung möglich sind. Die alleinige Erfassung von Gütern mit einer Kamera ist mit Problemen verbunden, wenn diese neben der Identifizierung des Gütertyps auch die exakte Quantität ableiten soll. Durch unterschiedliche Winkel und teilweise Verdeckung muss ggf. eine Identifikation anhand von Teilausschnitten erfolgen, was zeitaufwendig und fehlerbehaftet ist. Somit ist die direkte Erkennung anhand von Verfahren der Bildverarbeitung und gravimetrischer Information erfindungsgemäss möglich, dabei können in das Sensornetzwerk eines erfindungsgemässen Lagersystems optische Sensorelemente auch ohne direkte physische Verbindung mit gravimetrischen Sensorelementen integriert werden.

Eine geringfügige Modifikation der zu lagernden Güter erleichtert die Identifikation durch die Bildverarbeitung. So führt, wie in Fig.9b exemplarisch dargestellt, die hochreflektierende Bemalung eines Teils der Güter, in diesem Fall der Deckel der Dosen 12' und der Verkaufspackung 13', zu einer gut gegen der Hintergrund abgrenzbaren Form, die darüber hinaus eindeutig identifizierbar gestaltet werden kann. Im Gegensatz zu komplexeren RFID-Chips genügt bei den meisten Produkten ein einfacher Aufkleber, der zudem in seiner Form und Farbe weitere Freiheitsgrade aufweist, um eine verbesserte Identifizierbarkeit zu gewährleisten. Aufgrund der Zuordnung der Aufnahmen zu Standorten oder Warengruppen kann die Variationsbreite und damit die Zahl der benötigten unterscheidungskräftigen Markierungen begrenzt bleiben.

Die Verbindung einer Markierung 15 mit einem aktiven optischen Sensor zeigt Fig.10. Die in Fig.9b dargestellte Kennzeichnung setzt, wenn sie in farblicher Hinsicht unterschieden werden soll, einen spektral hinreichend auflösenden optischen Sensor voraus. Alternativ oder ergänzend kann jedoch eine Beleuchtung der gelagerten Güter erfolgen. So können beispielsweise die Anforderungen an das spektrale Auflösungsvermögen des optischen Sensorelements 5" einfach gehalten werden, wenn eine Emission S spektral selektiv erfolgt. Beispielsweise kann ein monochromatischer bzw. schmalbandiger Detektor im Sensorelement 5" verwendet werden, wobei rote und grüne Markierungen 15 zeitversetzt mit rotem und grünem Licht beleuchtet werden. Aus der Differenz der Intensitäten in den aufgenommenen Bildern können die beiden Markierungen und so die damit gekennzeichneten Güter unterschieden werden.

In den Figuren sind die Ausgestaltungen der Lagerregale und Aufnahmen, wie auch die Typen der gelagerten Güter rein exemplarisch zu verstehen. Die Erfindung ist im Rahmen des Handelns des Fachmanns auf beliebige Lageranordnungen oder Systeme mit gleicher Problemstellung zu übertragen. Gleichermassen stellen die aufgeführten Sensoren nur Beispiele für Vorrichtungen zur Erfassung geeigneter Parameter dar, die zur Identifikation und Quantitätsmessung der gelagerten Güter dienen.

## Patentansprüche

1. Lagersystem mit
• wenigstens einer Aufnahme (2a, 2b, 2c) für zu lagernde Güter (12, 13), insbesondere mit einer Anordnung mehrerer Aufnahmen (2a, 2b, 2c) als Regalböden in einem Regalsystem (1, 1', 1"),
• einem Kommunikations-Netzwerk (6) zur Erfassung und Übermittlung von Sensorsignalen und
• einer Recheneinheit (R) zur Verarbeitung der Sensorsignale und zur Ableitung von Bestandsdaten, wobei der wenigstens einen Aufnahme (2a, 2b, 2c) wenigstens ein als Sensormatrix ausgebildetes gravimetrisches Sensorelement (3, 3') zur Erfassung der Güter (12, 13) zugeordnet ist, **dadurch gekennzeichnet, dass** das gravimetrische Sensorelement (3, 3') zwischen der Aufnahme und den zu lagernden Gütern bei vollflächiger Erfassung der Aufnahme angeordnet ist, und dass jeder Typ von zu lagernden Gütern (12,13) durch wenigstens zwei Sensoren des Sensorelements (3,3') erfassbar ist.

2. Lagersystem nach Anspruch 1, **dadurch gekennzeichnet, dass** der wenigstens einen Aufnahme (2a, 2b, 2c) wenigstens ein als Sensorzeile oder Sensormatrix ausgebildetes optisches Sensorelement (5, 5', 5") zur optischen Erfassung der Güter (12, 13) zugeordnet ist.

3. Lagersystem nach einem der vorangehenden Ansprüche, **dadurch gekennzeichnet, dass**
das gravimetrische Sensorelement (3,3') nach wenigstens einem der folgenden Prinzipien ausgebildet ist
- Druckmessung,
- Widerstandsmessung,
- Kapazitätsmessung,
- Induktionsmessung,
- Piezosensor, berührungssensitive Oberfläche,
- magnetostriktiver Sensor,
- Acoustic Wave Sensor.

4. Lagersystem nach einem der vorangehenden Ansprüche 2 oder 3, **dadurch gekennzeichnet, dass** das optische Sensorelement (5,5',5") als CCD- oder CMOS- Kamera ausgebildet ist.

5. Lagersystem nach einem der vorangehenden Ansprüche 2 bis 4, **dadurch gekennzeichnet, dass** das optische Sensorelement (5,5',5") mit spektraler Sensitivität oder spektraler Selektivität ausgebildet ist.

6. Lagersystem nach einem der vorangehenden Ansprüche 2 bis 5, **dadurch gekennzeichnet, dass** das optische Sensorelement (5") zur Emission und zum Empfang von elektromagnetischer Strahlung (S) ausgebildet ist.

7. Lagersystem nach einem der vorangehenden Ansprüche, **dadurch gekennzeichnet, dass** der wenigstens einen Aufnahme (2a,2b,2c) wenigstens ein weiterer Parametersensor (11) zur Erfassung wenigstens eines Güter- oder Umweltparameters, insbesondere der Temperatur, zugeordnet ist.

8. Lagersystem nach einem der vorangehenden Ansprüche, **dadurch gekennzeichnet, dass** der wenigstens einen Aufnahme (2a,2b,2c) wenigstens ein Identifikationssensor zur Erfassung von RFID-Chips zugeordnet ist.

9. Verfahren zur Lagerverwaltung in einem Lagersystem nach einem der Ansprüche 1 bis 8, mit
- einem Aufnehmen von Sensorsignalen des gravimetrischen Sensorelements (3,3') und
- einem Verarbeiten der Sensorsignale zur Ableitung von Bestandsdaten, **gekennzeichnet durch** ein Zuordnen von Sensorsignalen einer Teilmenge von Sensoren des gravimetrischen Sensorelements (3,3') zu jeweils einem Typ von zu lagernden Gütern (12,13), wobei das Zuordnen vorzugsweise mit räumlichem Bezug erfolgt.

10. Verfahren nach Anspruch 9 **dadurch gekennzeichnet, dass** die Sensorsignale der Teilmenge mit dem Sensorsignal eines Parametersensors (11) und/oder Identifikationssensors verknüpft werden.

11. Verfahren nach einem der Ansprüche 9 oder 10, **dadurch gekennzeichnet, dass** aus den Sensorsignalen der Teilmenge auf eine der Teilmenge zugeordneten Quantität des Typs von zu lagernden Gütern (12,13) geschlossen wird.

12. Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 9 bis 11.

## Claims

1. Stocking system comprising:
• at least one support (2a, 2b, 2c) for goods (12, 13) to be stocked, in particular with an arrangement of several supports (2a, 2b, 2c) as shelf boards in a shelf system (1, 1', 1"),
• a communication network (6) for detecting and transmitting sensor signals, and
• a computing unit (R) for processing the sensor signals and for deriving inventory data, wherein at least one gravimetric sensor element (3, 3') for detecting the goods (12, 13) and configured as a sensor matrix is allocated to the at least one support (2a, 2b, 2c), **characterised in that** the gravimetric sensor element (3, 3') is arranged between the support and the goods to be stocked with the at least one support being subjected to a detection over its entire surface, and that every type of goods (12, 13) to be stocked is detectable by at least two sensors of the sensor element (3, 3').

2. Stocking system according to claim 1, **characterised in that** at least one optical sensor element (5, 5', 5") for optically detecting the goods (12, 13), which is formed as a sensor line or sensor matrix, is allocated to the at least one support (2a, 2b, 2c).

3. Stocking system according to any one of the preceding claims, **characterised in that** the gravimetric sensor element (3, 3') is configured according to at least one of the following principles
- pressure measurement,
- resistance measurement,
- capacity measurement,
- induction measurement,
- piezoelectric sensor, touch-sensitive surface,
- magnetostrictive sensor,
- acoustic wave sensor.

4. Stocking system according to any one of the preceding claims 2 or 3, **characterised in that** the optical sensor element (5, 5', 5") is configured as a CCD or CMOS camera.

5. Stocking system according to any one of the preceding claims 2 to 4, **characterised in that** the optical sensor element (5, 5', 5") is configured with spectral sensitivity or spectral selectivity.

6. Stocking system according to any one of the preceding claims 2 to 5, **characterised in that** the optical sensor element (5") is configured for emission and reception of electromagnetic radiation (S).

7. Stocking system according to any one of the preceding claims, **characterised in that** at least one further parameter sensor (11) for detecting at least one goods-related or environment-related parameter, in particular the temperature, is allocated to the at least one support (2a, 2b, 2c).

8. Stocking system according to any one of the preceding claims, **characterised in that** at least one identification sensor for detecting RFID chips is allocated to the at least one support (2a, 2b, 2c).

9. Method for stocking administration in a stocking system according to any one of the claims 1 to 8, comprising:
- a recording of sensor signals of the gravimetric sensor element (3, 3'), and
- a processing of the sensor signals for deriving inventory data, **characterised by** an allocation of sensor signals of a subset of sensors of the gravimetric sensor element (3, 3') to at least one type of goods (12, 13) to be stocked, wherein the allocation preferably takes place in spatial relation.

10. Method according to claim 9, **characterised in that** the sensor signals of the subset are combined with the sensor signal of a parameter sensor (11) and/or identification sensor.

11. Method according to any one of the claims 9 or 10, **characterised in that** the quantity, which is allocated to the subset, of the type of goods (12, 13) to be stocked is deduced from the sensor signals of the subset.

12. Computer program product with programming code that is stored on a machine-readable carrier or which is represented by an electromagnetic wave, for carrying out a method according to any one of the claims 9 to 11.

## Revendications

1. Système de stockage comprenant
- au moins un logement (2a, 2b, 2c) pour des biens à stocker (12, 13), en particulier un ensemble de plusieurs logements (2a, 2b, 2c) en tant que tablettes dans un système de rayonnage (1, 1', 1"),
- un réseau de communication (6) pour détecter et transmettre des signaux de capteur et
- une unité de calcul (R) pour traiter les signaux de capteur et pour dériver des données de stock, audit au moins un logement (2a, 2b, 2c) étant associé au moins un élément capteur gravimétrique (3, 3') pour la détection des biens (12, 13), qui est réalisé en tant que matrice de capteurs, **caractérisé par le fait que** ledit élément capteur gravimétrique (3, 3') est disposé entre le logement et les biens à stocker, avec une détection sur toute la surface du logement, et que chaque type de biens à stocker (12, 13) est détectable par au moins deux capteurs dudit élément capteur (3, 3').

2. Système de stockage selon la revendication 1, **caractérisé par le fait qu'**audit au moins un logement (2a, 2b, 2c) est associé au moins un élément capteur optique (5, 5', 5") pour la détection optique des biens (12, 13), qui est réalisé en tant que ligne de capteurs ou matrice de capteurs.

3. Système de stockage selon l'une quelconque des revendications précédentes, **caractérisé par le fait que** ledit élément capteur gravimétrique (3, 3') est réalisé selon l'un au moins des principes suivants
- mesure de pression,
- mesure de résistance,
- mesure de capacité,
- mesure d'induction,
- capteur piézoélectrique, surface sensitive au toucher,
- capteur magnétostrictif,
- capteur d'ondes acoustiques.

4. Système de stockage selon l'une quelconque des revendications précédentes 2 ou 3, **caractérisé par le fait que** ledit élément capteur optique (5, 5', 5") est réalisé en tant que caméra CCD ou CMOS.

5. Système de stockage selon l'une quelconque des revendications précédentes 2 à 4, **caractérisé par le fait que** ledit élément capteur optique (5, 5', 5") est réalisé à sensitivité spectrale ou à sélectivité spectrale.

6. Système de stockage selon l'une quelconque des revendications précédentes 2 à 5, **caractérisé par le fait que** ledit élément capteur optique (5") est réalisé pour l'émission et pour la réception de rayonnement électromagnétique (S).

7. Système de stockage selon l'une quelconque des revendications précédentes, **caractérisé par le fait qu'**audit au moins un logement (2a, 2b, 2c) est associé au moins un autre capteur de paramètre (11) pour la détection d'au moins un paramètre de biens ou d'environnement, en particulier de la température.

8. Système de stockage selon l'une quelconque des revendications précédentes, **caractérisé par le fait qu'**audit au moins un logement (2a, 2b, 2c) est associé au moins un capteur d'identification pour la détection de puces RFID.

9. Procédé de gestion de stock dans un système de stockage selon l'une quelconque des revendications 1 à 8, comprenant
- un enregistrement de signaux de capteur dudit élément capteur gravimétrique (3, 3') et
- un traitement des signaux de capteur pour dériver des données de stock, **caractérisé par** une association de signaux de capteur d'une partie de l'ensemble de capteurs dudit élément capteur gravimétrique (3, 3') respectivement à un type de biens à stocker (12, 13), ladite association se faisant de préférence en relation avec l'espace.

10. Procédé selon la revendication 9, **caractérisé par le fait que** les signaux de capteur de ladite partie de l'ensemble sont combinés avec le signal de capteur d'un capteur de paramètre (11) et/ou d'un capteur d'identification.

11. Procédé selon l'une quelconque des revendications 9 ou 10, **caractérisé par le fait que** l'on conclut des signaux de capteur de ladite partie de l'ensemble à une quantité du type de biens à stocker (12, 13), qui est associée à ladite partie de l'ensemble.

12. Produit de programme d'ordinateur avec code de programme qui est mémorisé sur un support lisible par machine ou est représenté par une onde électromagnétique, pour la mise en oeuvre du procédé selon l'une quelconque des revendications 9 à 11.
